# EUROPÄISCHE PATENTSCHRIFT

(11) **EP 1 642 097 B1**
(45) Veröffentlichungstag und Bekanntmachung des Hinweises auf die Patenterteilung: **22.11.2006**
(21) Anmeldenummer: 04766127.7
(22) Anmeldetag: 05.07.2004
(51) Int. Cl.: G01G 21/28

(54) **WAAGE MIT WINDSCHUTZELEMENT**
BALANCE COMPRISING A WIND SHIELD
BALANCE POURVUE D'UN ECRAN PROTECTEUR

(30) Priorität: 07.07.2003 DE 10330788
(43) Veröffentlichungstag der Anmeldung: 05.04.2006
(73) Patentinhaber: Mettler-Toledo AG, 8606 Greifensee (CH)
(72) Erfinder: LEISINGER, Roger, CH-8044 Zürich (CH); MATTLE, Bruno, CH-8810 Uster (CH); ROTACH, Hansjürg, CH-8307 Effretikon (CH); MORF, Patrik, CH-8606 Nänikon (CH); KÜNZI, Hansruedi, CH-8606 Greifensee (CH); MARMIER, Yves, CH-2300 La-Chaux-de-Fonds (CH)
(86) Internationale Anmeldenummer: PCT/EP2004/051355
(87) Internationale Veröffentlichungsnummer: WO 2005/003697

(56) Entgegenhaltungen:
- CH-A- 633 106
- DE-U- 9 313 902
- FR-A- 2 717 898

## Beschreibung

Die Erfindung betrifft eine Waage mit einem der Unterbringung der Wägemechanik und der Wägeelektronik dienenden Waagengehäuse, mit einer Waagschale und mit einem Windschutzelement, welches auf dem Waagengehäuse lose positionierbar ist und die Waagschale umgibt

Solche Waagen finden ihren Einsatz vorzugsweise im Labor, in der Produktion oder im Lager und sind häufig für einen breiten Wägebereich optimiert. Diese Waagen verfügen über ein Waagengehäuse in dessen Inneren die Wägemechanik und die Wägeelektronik untergebracht sind, und bei welchen ein Verbindungselement zwischen der Waagschale und der Wägezelle durch mindestens eine Öffnung an der Oberseite des Waagengehäuses hindurch reicht. Solche Waagen sind häufig mit einer grossflächigen Waagschale ausgestattet. Um den Einfluss von Luftbewegungen in der Nähe der Waagschale auf das Wägeergebnis zu reduzieren, weisen die Waagen meist eine Windschutzvorrichtung auf. In besonderer Weise ist der Bereich zwischen der Waagschale und dem Oberteil des Waagengehäuses starken Windeinflüssen ausgesetzt, wobei jedoch Vorrichtungen des Standes der Technik zur Reduktion dieser negativen Einflüsse auf das Wägeergebnis bekannt sind. Allerdings ist die Flexibilität solcher Waagen meist stark eingeschränkt.

Bei einer von der Anmelderin hergestellten und vertriebenen Waage mit der Bezeichnung "PR 8002" ist ein Windschutzelement in Form eines Rings vorhanden, welcher den Spalt zwischen der Oberseite des Waagengehäuses und der Waagschale abschirmt. Dieser Ring weist im Querschnitt etwa ein U-Profil auf und liegt auf einer bündig mit der ebenen Oberseite des Waagengehäuses abschliessenden, leicht abgeschrägten Fläche auf. Der Ring wird dabei mittels einer Halterung in Form von Haltelaschen, die in Stege an den Innenseiten des U-förmigen Profils eingreifen, gehalten und geführt.

Nachteilig ist an diesem Windschutzring, dass er durch das Einhängen in die Halterung sorgfältig positioniert werden muss. Ausserdem erschweren die Haltelaschen das Reinigen des Waagengehäuses. Eine Schutzvorrichtung für die Waagschale einer oberschaligen Feinwaagen ist aus CH-A5-633106 bekannt.

Die JP 09-189597-A zeigt eine Windschutzvorrichtung, deren weiterer Zweck darin besteht, zu vermeiden, dass Insekten in das Innere des Waagengehäuses über den Zwischenraum zwischen Waagschale und Waagengehäuse gelangen. Ein tellerförmiger Untersatz mit nach oben gebogenen Rändern, die den Spalt zwischen Waagschale und Waagengehäuse abdecken, ist an der Oberseite des Waagengehäuses angebracht. Die der Waagschale zugewandte Oberfläche des Untersatzes ist mit einem entsprechenden insektenschädigenden Mittel versehen.

Nachteilig ist hier, dass jedes Mal zum Reinigen der Windschutzvorrichtung die Waagschale entfernt werden muss.

Die DE 32 05 799 offenbart eine Waage, bei der eine Abschirmung in Form eines Tellers, welcher beabstandet vom Waagengehäuse und von der Waagschale unter diese greift, und der dort eine mittige Öffnung für den Durchtritt des Verbindungsstücks zwischen Waagschale und Wägezelle aufweist. Der Zweck der von der Oberseite des Waagengehäuses beabstandeten Installation des Tellers besteht darin, die Waageschale gegen Luftströmungen infolge von Temperaturunterschieden, die aus der Erwärmung durch die Wägeelektronik resultieren, abzuschirmen. Mittels eines Kragens, der auf dem Teller aufliegt, sollen auch weitere Luftströmungen, die zwischen Waagschale und Teller gelangen könnten, abgeschirmt werden. Problematisch an dieser Vorrichtung erscheint, dass der Bereich zwischen dem Teller und der Oberseite des Waagengehäuses für eine Reinigung schwer zugänglich ist.

In der EP-A-0 574 668 ist eine Waage offenbart mit einer oberen Abdeckwand eines Windschutzgehäuses, die mit Hilfe einer manuell betätigbaren Verriegelung befestigbar bzw. abnehmbar ist. Nach Abnahme der Abdeckwand ist es möglich, sowohl die Vorderwand als auch die Seitenwände zum Zwecke der Reinigung vollständig aus dem Gehäuse zu entfernen. Bei dieser bekannten Ausführung ist die Abdeckwand Teil eines das Windschutzgehäuse zusammenhaltenden Rahmens, der allerdings den darunter liegenden Wänden eine gewisse Stegfreiheit und damit eine bessere Sicht auf das Innere des Windschutzgehäuses zugesteht. Diese Windschutzvorrichtung ist für manche Anwendungen noch nicht ganz befriedigend, da die Ausführung eine gewisse Manipulation an den Riegeln bedingt, die mit hoher Präzision gefertigt sein müssen, um mit den sie aufnehmenden Ausnehmungen zu fluchten.

Aufgabe der Erfindung ist es, eine Waage zu schaffen, welche hinsichtlich der Verwendung eines Windschutzelements flexibel handhabbar und reinigungsfreundlich ist.

Diese Aufgabe wird mit einer Waage gemäss dem unabhängigen Anspruch 1 gelöst.

Eine Waage mit einem der Unterbringung der Wägemechanik und der Wägeelektronik dienenden Waagengehäuse ist mit einer Waagschale und mit einem Windschutzelement, welches auf dem Waagengehäuse lose positionierbar ist und die Waagschale umgibt, versehen, wobei das Waagengehäuse für die Aufnahme des Windschutzelements über einen Absatz verfügt, dessen Auflagefläche für das Windschutzelement unterhalb der Oberseite des Waagengehäuses angeordnet ist.

Der Vorteil einer solchen Waage besteht darin, dass auf schnelle und einfache Weise ein Mittel zur Reduktion des Windeinflusses am Waagengehäuse anbringbar ist, und somit den Anforderungen an die Genauigkeit einer Wägung in flexibler Weise Rechnung getragen werden kann.

In bevorzugter Ausführung ist das Waagengehäuse aus einem einstückig geformten Unterteil und einem einstückigen Oberteil zusammengesetzt, wobei der Absatz im Oberteil ausgeformt ist. Dabei zeichnet sich der Absatz in vorteilhafter Weise durch eine weitgehend horizontale Auflagefläche mit einer Breite von mindestens 3 mm und eine weitgehend vertikale Führungsfläche mit einer Höhe von mindestens 5 mm aus. Somit weist die Waage eine besonders hohe Reinigungsfreundlichkeit auf, da der Absatz, ohne der Waagschale nahe zu kommen oder sie zu berühren, schnell und sicher von herunter gefallenem Wägegut befreit werden kann. Für das Entfernen des Windschutzelements ist das Entfernem der Waagschale nicht erforderlich.

In einer vorteilhaften Ausführungsform ist das Windschutzelement ein Windschutzring, welcher der Form der Waagschale angepasst ist. In einer anderen Ausführung, wenn an die Empfindlichkeit der Waage besonders hohe Anforderungen gestellt werden, ist das Windschutzelement ein die Waagschale umschliessender und einen Wägeraum bildender Windschutzkörper. Auf diese Weise ist das Waagengehäuse modular aufgebaut und für die Aufnahme verschiedenster Windschutzelemente optimiert.

In bevorzugter Ausgestaltung weist das Windschutzelement Abstandsmittel auf, wodurch es in etwa gleichmässigem Abstand zur Waagschale positionierbar ist. Die Abstandsmittel bestehen beispielsweise aus einem an der Innenseite des Windschutzeiements umlaufenden Vorsprung mit an diesem angebrachten Noppen.

Es dient insbesondere der Reinigungsfreundlichkeit der Waage, da die einer möglichen Verschmutzung ausgesetzte Fläche klein gehalten wird, wenn die im Wesentlichen vertikalen Flächen des Windschutzeiements in der Flucht mit den Wänden des Unterteils des Waagengehäuses angeordnet sind. Zusätzlich bietet die Waage dadurch ein ästhetisches Erscheinungsbild.

Bei nicht installiertem Windschutzelement kann eine grossflächige Waagschale mit einer horizontalen Stellfläche für das Wägegut und mit mindestens einer weitgehend vertikalen Seitenfläche mit der Waage verbunden werden, wobei deren Seitenflächen die vertikalen Führungsflächen des Absatzes überdecken und etwa in der Flucht mit den Wänden des Unterteils des Waagengehäuses angeordnet sind.

Die erfindungsgemässe Waage wird anhand eines in den Zeichnungen dargestellten Ausführungsbeispiels im Folgenden näher erläutert. Es zeigen:
- Figur 1: eine Ansicht der Waage ohne Anzeige- und Bedieneinheit in dreidimensionaler Darstellung, a) ohne Windschutzelement, b) mit ringförmigem Windschutzelement,
- Figur 2: eine Seitenansicht der Waage, a) ohne Windschutzelement, b) mit ringförmigem Windschutzelement,
- Figur 3: eine Aufsicht der Waage mit ringförmigem Windschutzelement,
- Figur 4: einen Schnitt durch ein Teilstück des Windschutzrings,
- Figur 5: eine weitere Ausführungsform der Waage mit einem aufgesetzten Windschutzkörper, in dreidimensionaler Darstellung.

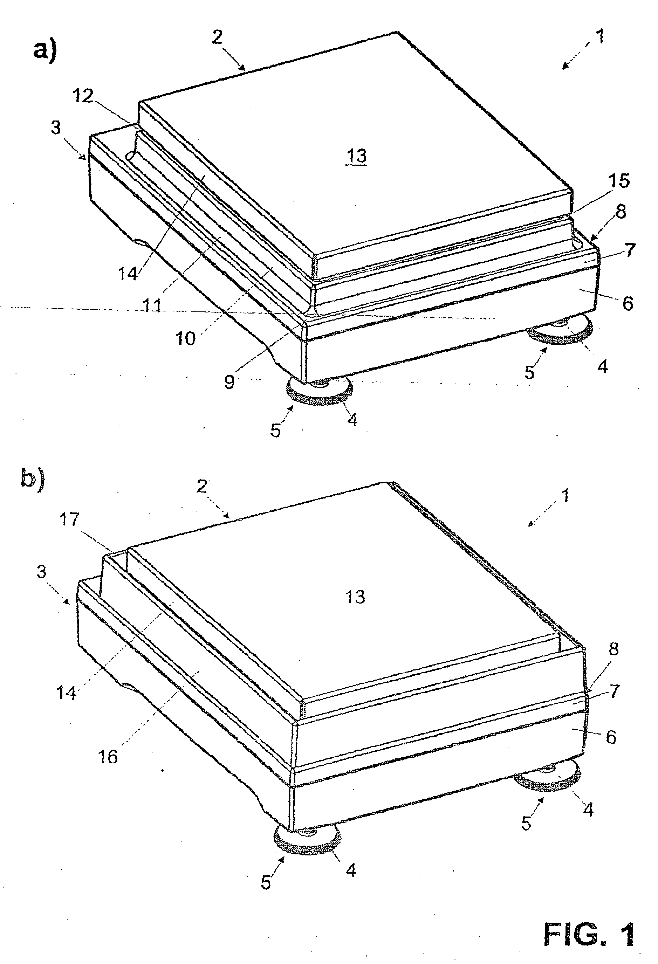

In der Figur 1 ist eine Waage 1 dargestellt, wie sie beispielsweise in einem Labor, in der Produktion oder in einem Lager stehen kann. Die Waage 1 weist ein Waagengehäuse 3 auf, worin die hier nicht sichtbare Wägezelle und die Wägeelektronik untergebracht sind. Die-Waagschale 2 ist mit der Wägezelle verbunden. Sie erstreckt sich in dem in der Figur gezeigten Beispiel über nahezu die gesamte Ausdehnung des Waagengehäuses 3. Die Waage 1 steht auf drei Stellfüssen 5, von denen die beiden an der Vorderseite der Waage angebrachten Stellfüsse in der Figur zu sehen sind. Jeder dieser Stellfüsse 5 weist ein Rad 4 auf, mit dem dieser für eine Nivellierung der Waage 1 höhenverstellt werden kann. Die Höhenverstellung erfolgt mittels Ein- und Ausschrauben des jeweiligen Stellfusses 5 in das Waagengehäuse 3 und aus diesem.

Die Figur 1a) zeigt die Waage 1 ohne Windschutzelement, wodurch die besondere Form des Waagengehäuses 3 ersichtlich wird. Das Waagengehäuse 3 besteht aus einem einstückigen schalenförmigen Unterteil 6, auf welchem ein einstückiges Oberteil 7 aufgesetzt und am Unterteil 6, vorzugsweise mittels Schrauben, befestigt ist. Dabei befinden sich die vertikalen Wände des Oberteils 7 und des Unterteils 6 in Flucht zueinander. Das Oberteil 7 weist einen vollständig umlaufenden Absatz 8 auf, welcher sich aus einer etwa horizontalen Auflagefläche 9 und einer vertikalen Führungsfläche 10 zusammensetzt. Zwischen der horizontalen Auflagefläche 9 und der vertikalen Führungsfläche 10 liegt ein abgerundeter Übergangsbereich 11. Das Oberteil 7 des Gehäuses 3 schliesst nach oben mit einer horizontalen Abdeckwand 12, sozusagen als Oberseite des Waagengehäuses, ab, welche entweder in ihrer Mitte eine Öffnung (hier nicht sichtbar, da unterhalb der Waagschale angeordnet) oder nahe der vier Eckpunkte des Oberteils befindliche Öffnungen (hier ebenfalls nicht sichtbar) zur Durchführung der die Waagschale 2 mit der Wägezelle verbindenden Verbindungselemente aufweist.

Die Waagschale 2 ist rechteckig und mit einer horizontalen Stellfläche 13 für die Auflage des Wägeguts und vertikal nach unten gebogenen Seitenbereichen 14, die ihr die Form eines auf einer Seite offenen Hohlquaders verleihen, versehen. Die Kanten der Waagschale 2 sind abgerundet. Die Seitenbereiche 14 der Waagschale 2 befinden sich etwa in Flucht mit der vertikalen Führungsfläche 10, wobei sich zwischen der Waagschale 2 und der vertikalen Führungsfläche 10 und damit auch der Abdeckwand 12 ein Spalt 15 befindet, welcher der Waagschale 2 den für den Wägevorgang notwendigen Bewegungsspielraum verleiht.

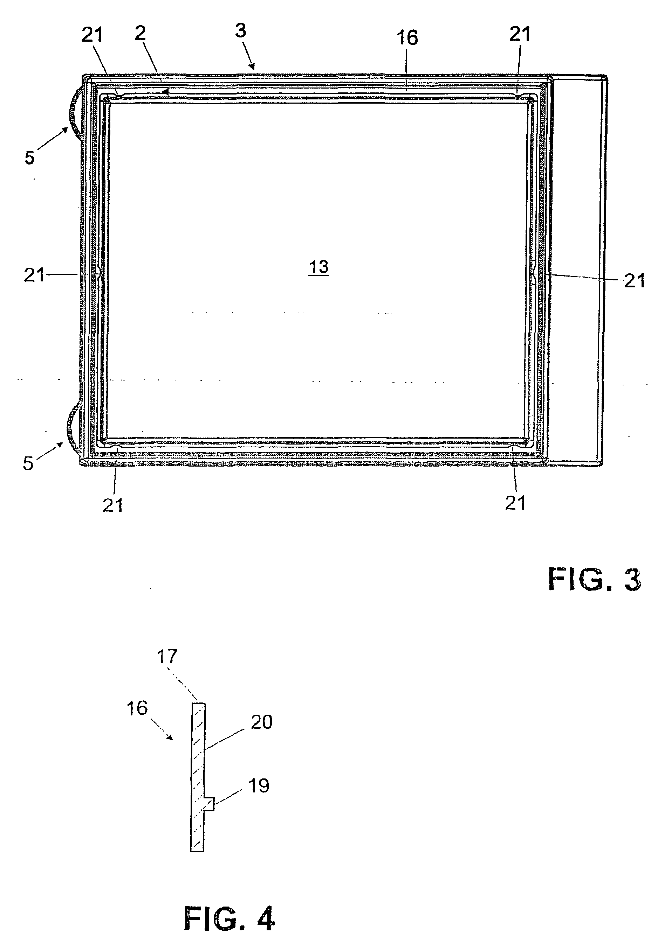

Der Absatz 8 dient der Auflage eines Windschutzelements, welches wie in der Figur 1b) gezeigt, als ein Windschutzring 16, der der Form der Waagschale 2 angepasst ist, ausgestaltet ist. Dieser Windschutzring 16 liegt lose auf dem Absatz 8 auf. Er weist auf allen vier Seiten einen etwa gle-ichmässigen Abstand zur Waagschale 2 auf, da er mit Abstandshaltern versehen ist, wie weiter unten in Zusammenhang mit der Figur 3 beschrieben wird. Die wesentliche Funktion des Windschutzrings 16 besteht darin, den Spalt 15 zwischen Waagschale 2 und Abdeckwand 12 des Waagengehäuses 3 abzuschirmen und somit die Waage 1 unempfindlich gegenüber Windeinflüssen in diesem besonders empfindlichen Bereich zu machen.

Die Oberkante 17 des Windschutzrings 16 liegt um einige Millimeter unterhalb der Stellfläche 13 der Waagschale 2, so dass auch Wägegüter, die über die Waagschale 2 hinausreichen, nicht auf dem Windschutzring 16 aufliegen. Dies ist jedoch nicht in jedem Fall notwendig, sondern es ist auch ein Windschutzelement in Form eines Windschutzrings vorstellbar, welcher über die Höhe, in der die Stellfläche 13 für das Wägegut angeordnet ist, hinausragt. Die im Wesentlichen vertikalen Aussenflächen des Windschutzrings 16 sind in der Flucht mit den vertikalen Wänden des Unterteils 6 des Waagengehäuses 3 angeordnet.

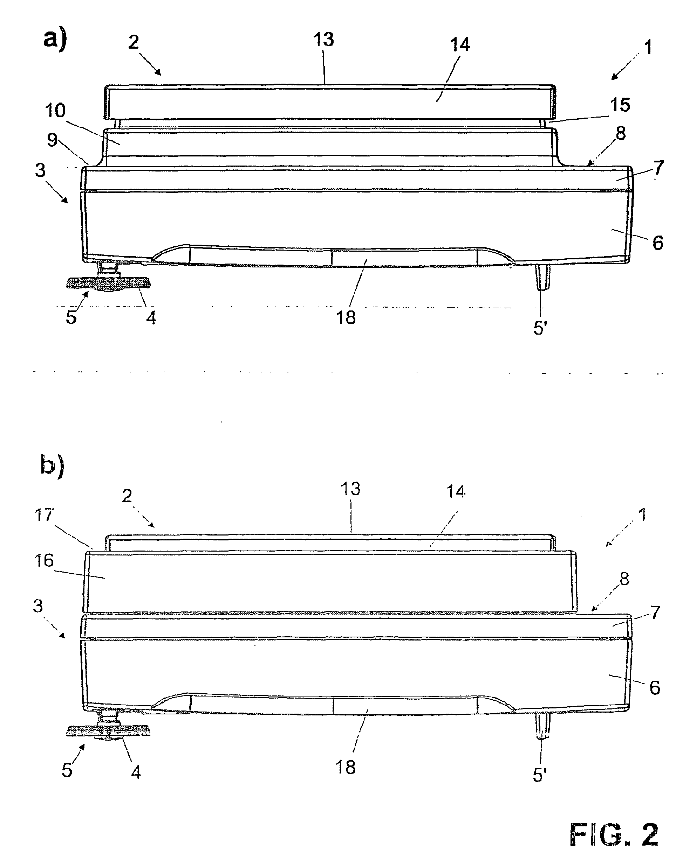

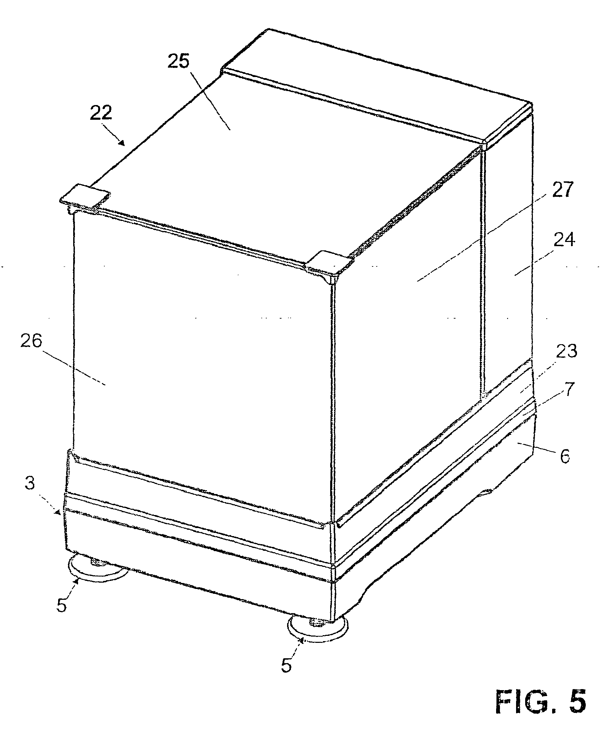

Die Figur 2 zeigt eine Waage 1 in der Seitenansicht, a) ohne Windschutzelement, b) mit einem installierten Windschutzring 16. Hier ist zu erkennen, wie sich die Waage 1 an ihrer dem Benutzer zugewandten Seite (in der Figur links) einerseits auf zwei in ihrer Höhe verstellbaren Stellfüssen 5 (nur einer davon ist zu erkennen) abstützt und andererseits nahe ihrem hinteren Ende (in der Figur rechts) auf einem dritten Abstützpunkt 5' ruht. Die Waage 1 weist beidseitig Griffmulden 18 auf, die das Anheben der Waage 1 von ihrer Unterlage erleichtern. Wie aus den Figuren 2a) und 2b) zu erkennen ist, ist der Absatz 8 im hinteren Bereich der Waage 1 verlängert, was die Installation eines weiteren Windschutzelements, nämlich eines Windschutzkörpers mit einer Rückwand, wie er in der Figur 5 gezeigt ist, ermöglicht.

Die Höhe des Absatzes 8, sowie dessen weitgehend horizontale Auflagefläche 9 sind in ihren Abmessungen dahingehend optimiert, dem Waagengehäuse 3, der Waagschale 2 sowie einem entsprechenden Windschutzelement eine genügend hohe Steifigkeit zu gewähren, so dass die genannten Teile, ohne ihre Form durch ein eventuelles Verbiegen zu verändern, aufeinander abgestimmt werden können. Vorzugsweise beträgt die Breite der horizontalen Auflagefläche 9 mindestens 3 mm und die Höhe der vertikalen Führungsfläche 10 mindestens 5 mm.

In Figur 3 ist die Waage 1 in der Sicht von oben mit einem auf den Absatz 8 aufgebrachten Windschutzring 16 dargestellt. Dieser weist in jedem Teilabschnitt das in der Figur 4 gezeigte Profil mit einem umlaufenden Vorsprung 19 an der Ringinnenseite 20 auf. Dadurch wird ein Platzieren des Windschutzrings 16 mit einem etwa gleichmässigen Abstand von der Waagschale 2 ermöglicht. Zusätzlich sind, wie aus der Figur 3 ersichtlich, an sechs Positionen noch Abstandsnoppen 21 an dem Vorsprung 19 angebracht, die, wenn der Windschutzring 16 installiert ist, mit der vertikalen Führungsfläche 10 mit geringem Spiel in Anlage gelangen und somit ein Verschieben des Windschutzrings 16 massiv einschränken.

Es ist nun auch denkbar, an Stelle des Windschutzrings 16 andere Windschufzelemente auf dem Absatz 8 aufzusetzen. Dies kann beispielsweise ein lose aufgesetzter Windschutzkörper 22, wie er in der Figur 5 dargestellt ist, sein. Der Windschutzkörper 22 ist mit einem Sockel 23 versehen, welcher beispielsweise über die Abdeckwand 12 und die vertikale Führungsfläche 10 des Oberteils 7 übergestülpt werden kann und ebenfalls mit mindestens einer Durchbrechung für die Verbindung der Waagschale 2 mit der Wägezelle versehen ist. Im hinteren Bereich der Waage 1 ist eine Kammer 24 auf dem Sockel 23 angeordnet und schliesst somit einen innerhalb des Windschutzkörpers 22 entstandenen Wägeraum ab, wobei eine Seite der Kammer 24 dessen Rückwand bildet. Der Windschutzkörper 22 weist weitere den Wägeraum umgebende Elemente auf, nämlich einen an die Kammer 24 angelenkten Deckel 25, ein Frontelement 26 und zwei Seitenelemente 27 (nur eines ist in der Figur zu sehen), welche entweder fest oder lose mit dem Windschutzkörper 22 in Verbindung stehen.

Vielfältige weitere Windschutzelemente sind denkbar, denen gemeinsam ist, dass sie lose auf dem Absatz 8 aufbringbar sind. Beispielsweise muss ein Windschutzelement gemäss Figur 5 nicht zwangsläufig über eine Kammer 24 verfügen. Auch ist es denkbar, bei einer erfindungsgemässen oben beschriebenen Waage 1 auf das Anbringen eines Windschutzelements ganz zu verzichten und die Waage 1 mit einer grossen Waagschale zu versehen. Diese Waagschale kann dann in ihrer horizontalen Ausdehnung über den Absatz 8 hinaus reichen und mit ihren Seitenbereichen etwa in einer Flucht mit den vertikalen Seitenwänden des Unterteils 6 des Waagengehäuses 3 liegen. Es versteht sich von selbst, dass die Waagschale nicht auf eine Rechteckform beschränkt ist.

Die verschiedenen Ausgestaltungen verleihen der Waage 1 ein hohes Mass an Modularität und Flexibilität und gewährleisten einen den Bedürfnissen und Einsatzgebieten eines Benutzers entsprechenden Aufbau, wobei das Umrüsten ohne Werkzeug erfolgen kann.

### Bezugszeichenliste

- 1: Waage
- 2: Waagschale
- 3: Waagengehäuse
- 4: Rad
- 5: Stellfuss
- 5': Abstützpunkt
- 6: Unterteil des Waagengehäuses
- 7: Oberteil des Waagengehäuses
- 8: Absatz
- 9: horizontale Auflagefläche
- 10: vertikale Führungsfläche
- 11: Übergangsbereich
- 12: Abdeckwand
- 13: Stellfläche
- 14: Seitenbereich
- 15: Spalt
- 16: Windschutzring
- 17: Oberkante des Windschutzrings
- 18: Griffmulden
- 19: Vorsprung
- 20: Ringinnenseite
- 21: Abstandsnoppen
- 22: Windschutzkörper
- 23: Sockel
- 24: Kammer
- 25: Deckel
- 26: Frontelement
- 27: Seitenelement

## Patentansprüche

1. Waage (1) mit einem der Unterbringung der Wägemechanik und der Wägeelektronik dienenden Waagengehäuse (3), das in der für den Betrieb aufgestellten Waage mit einer horizontalen Abdeckwand (12) als Oberseite abschliesst, mit einer Waagschale (2) und mit einem Windschutzelement (16, 22), welches auf dem Waagengehäuse (3) lose positionierbar ist und die Waagschale (2) umgibt, **dadurch gekennzeichnet, dass** das Waagengehäuse (3) für die Aufnahme des Windschutzelements über einen Absatz (8) verfügt, dessen weitgehend horizontale Auflagefläche (9) für das Windschutzelement gegenüber der horizontalen Abdeckwand (12) in vertikaler Richtung versetzt ist.

2. Waage nach Anspruch 1, **dadurch gekennzeichnet, dass** das Waagengehäuse (3) aus einem einstückig geformten Unterteil (6) und einem einstückigen Oberteil (7) zusammengesetzt ist, und dass der Absatz (8) im Oberteil (7) ausgeformt ist.

3. Waage nach Anspruch 1 oder 2, **dadurch gekennzeichnet, dass** der Absatz (8) eine weitgehend horizontale Auflagefläche (9) und eine weitgehend vertikale Führungsfläche (10) aufweist.

4. Waage nach Anspruch 3 **dadurch gekennzeichnet, dass** die weitgehend horizontale Auflagefläche (9) des Absatzes (8) eine Breite von mindestens 3 mm und die weitgehend vertikale Führungsfläche (10) eine Höhe von mindestens 5 mm, aufweist.

5. Waage nach einem der Ansprüche 1 bis 4, **dadurch gekennzeichnet, dass** das Windschutzelement ein Windschutzring (16) ist, welcher der Form der Waagschale (2) angepasst ist.

6. Waage nach einem der Ansprüche 1 bis 4, **dadurch gekennzeichnet, dass** das Windschutzelement ein die Waagschale (2) umschliessender und einen Wägeraum bildender Windschutzkörper (22) ist.

7. Waage nach einem der Ansprüche 1 bis 6, **dadurch gekennzeichnet, dass** das Windschutzelement (16, 22) Abstandsmittel (19, 21) aufweist, wodurch es in etwa gleichmässigem Abstand zur Waagschale (2) positionierbar ist.

8. Waage nach Anspruch 7, **dadurch gekennzeichnet, dass** die Abstandsmittel einen an der Innenseite (20) des Windschutzetements umlaufenden Vorsprung (19) mit an diesen angebrachten Abstandsnoppen (21) aufweisen.

9. Waage nach einem der Ansprüche 2, bis 6, **dadurch gekennzeichnet, dass** die im Wesentlichen vertikalen Flächen des Windschutzelements (16, 22) In der Flucht mit den Wänden des Unterteils (6) des Waagengehäuses (3) angeordnet sind.

10. Waage nach einem der Ansprüche 3, bis 6, **dadurch gekennzeichnet, dass** bei nicht Installiertem Windschutzelement (16,22) eine grossflächige Waagschale mit einer horizontalen Stellfläche für das Wägegut und mit mindestens einer weitgehend vertikalen Seitenfläche aufbringbar ist, wobei die mindestens eine Seitenfläche, die vertikale Führungsfläche (10) des Absatzes (8), überdeckt und etwa in der Flucht mit den Wänden des Unterteils (6) des Waagengehäuses (3) angeordnet ist.

## Claims

1. Balance (1) with a balance housing (3) that serves to accommodate the weighing mechanism and the weighing-related electronics and which, when the balance is set up in its operating position, is closed off by a horizontal top-covering wall (12) constituting the topside of the balance housing (3), further with a weighing pan (2) and with a draft protection element (16, 22) which can be loosely positioned on the balance housing (3) and which surrounds the weighing pan (2), **characterized in that** the balance housing (3) is equipped with a step (8) which serves to receive the draft protection element and whose largely horizontal seating surface (9) for the draft protection element is offset in the vertical direction relative to the horizontal top-covering wall (12).

2. Balance according to claim 1, **characterized in that** the balance housing (3) is put together of a monolithically formed bottom part (6) and a monolithically formed top part (7), and **in that** the step (8) is formed in the top part (7).

3. Balance according to claim 1 or 2, **characterized in that** the step (8) comprises a largely horizontal seating surface (9) and a largely vertical positioning guide surface (10).

4. Balance according to claim 3, **characterized in that** the largely horizontal seating surface (9) of the step (8) has a width of at least 3 mm, and the largely vertical positioning guide surface (10) has a height of at least 5 mm.

5. Balance according to one of the claims 1 to 4, **characterized in that** the draft protection element is a draft protection ring (16) which is adapted to conform to the shape of the weighing pan (2).

6. Balance according to one of the claims 1 to 4, **characterized in that** the draft protection element is a draft protection body (22) that surrounds the weighing pan (2) and forms a weighing compartment.

7. Balance according to one of the claims 1 to 6, **characterized in that** the draft protection element (16, 22) has spacing means (19, 21) whereby the draft protection element (16, 22) can be positioned with a substantially uniform distance to the weighing pan (2).

8. Balance according to claim 7, **characterized in that** the spacing means comprise a raised ledge (19) extending all around the inside (20) of the draft protection element, and further comprise space-holding projections (21) arranged on the raised ledge (19).

9. Balance according to one of the claims 2 to 6, **characterized in that** the substantially vertical surface areas of the draft protection element (16, 22) are arranged in flush alignment with the walls of the bottom part (6) of the balance housing (3).

10. Balance according to one of the claims 3 to 6, **characterized in that** when no draft protection element (16, 22) is installed, a weighing pan that has a large surface area, with a horizontal receiving surface for the weighing objects and with at least one largely vertical side surface, can be set in place, wherein said at least one side surface covers the vertical positioning guide surface (10) of the step (8), and is arranged substantially in flush alignment with the walls of the bottom part (6) of the balance housing (3).

## Revendications

1. Balance (1) comprenant un carter de balance (3) servant au logement du mécanisme de pesée et à l'électronique de pesée, qui se termine dans la balance installée pour l'usage avec une paroi de couvercle (12) horizontale comme côté supérieur, un plateau de pesée (2) et un élément pare brise (16, 22), qui peut être positionné de façon libre sur le carter de balance (3) et entoure le plateau de pesée (2), **caractérisée en ce que** le carter de balance (3) dispose pour le logement d'un élément pare brise d'un décrochement (8), dont la surface de support (9) largement horizontale pour l'élément pare brise est décalée dans le sens vertical par rapport à la paroi de couvercle (12) horizontale.

2. Balance selon la revendication 1, **caractérisée en ce que** le carter de balance (3) est composé d'une partie inférieure (6) formée d'une seule pièce et d'une partie supérieure (7) d'une seule pièce et **en ce que** le décrochement (8) est formé dans la partie supérieure (7).

3. Balance selon la revendication 1 ou 2, **caractérisée en ce que** le décrochement (8) présente une surface de support (9) largement horizontale et une surface de guidage (10) largement verticale.

4. Balance selon la revendication 3, **caractérisée en ce que** la surface de support (9) largement horizontale du décrochement (8) présente une largeur d'au moins 3 mm et la surface de guidage (10) largement verticale présente une hauteur d'au moins 5 mm.

5. Balance selon l'une quelconque des revendications 1 à 4, **caractérisée en ce que** l'élément pare brise est une bague pare brise (16) qui est adaptée à la forme du plateau de pesée (2).

6. Balance selon l'une quelconque des revendications 1 à 4, **caractérisée en ce que** l'élément pare brise est un corps pare brise (22) entourant le plateau de pesée (2) et formant un espace de pesée.

7. Balance selon l'une quelconque des revendications 1 à 6, **caractérisée en ce que** l'élément pare brise (16, 22) présente des moyens de distance (19, 21), de sorte qu'il peut être positionnés à une distance à peu près régulière par rapport au plateau de pesée (2).

8. Balance selon la revendication 7, **caractérisée en ce que** les moyens de distance présentent une partie saillante (19) périphérique sur le côté intérieur (20) de l'élément pare brise avec des noppes d'espacement (21) placées sur cette saillie.

9. Balance selon l'une quelconque des revendications 2 à 6, **caractérisée en ce que** les surfaces sensiblement verticales de l'élément pare brise (16, 22) sont disposées en alignement avec les parois de la partie inférieure (6) du carter de balance (3).

10. Balance selon l'une quelconque des revendications 3 à 6, **caractérisée en ce que**, dans le cas d'un élément pare brise (16, 22), non installé, un plateau de pesée de grande surface avec une surface de réception horizontale pour l'objet à peser et avec au moins une surface latérale largement verticale peut être appliqué, la au moins une surface latérale recouvrant la surface de guidage (10) verticale du décrochement (8) et étant disposée à peu près en alignement avec les parois de la partie inférieure (6) du carter de balance (3).
